# EUROPEAN PATENT SPECIFICATION

(11) **EP 2 366 573 B1**
(45) Date of publication and mention of the grant of the patent: **26.09.2012**
(21) Application number: 10197410.3
(22) Date of filing: 30.12.2010
(51) Int. Cl.: B60J 7/16, B60J 7/20

(54) **Convertible automobile**
Cabriolet-Fahrzeug
Véhicule cabriolet

(30) Priority: 03.03.2010 IT TO20100159
(43) Date of publication of application: 21.09.2011
(73) Proprietor: Pininfarina S.P.A., 10121 Torino (IT)
(72) Inventor: Vanni, Marco c/o Pininfarina S.p.A., 10020 Cambiano (Torino) (IT); Zanirato, Davide c/o Pininfarina S.p.A., 10020 Cambiano (Torino) (IT)
(74) Representative: Buzzi, Franco

(56) References cited:
- DE-A1-102005 026 281
- DE-A1-102008 030 013
- US-A1- 2006 255 619

## Description

### Field of the invention

The present invention refers to convertible automobiles having a roof displaceable between an advanced and raised closed condition, in which it closes the cabin at the top part, and a receded and lowered open condition in which the roof is stowed in a rear compartment or trunk provided with a movable cover. The cover of the rear compartment is displaceable between a closed position and an open position to enable the introduction of the roof upon displacement thereof from the closed condition to the open condition, as well as withdrawal of the roof upon return thereof from the open condition to the closed condition.

### Prior art

Various models of convertible automobiles of the previously described type, in which the displacement of the cover of the rear compartment to enable introduction and withdrawal of the roof occurs in some cases through rearward translation and in other cases by swinging upwards, are currently known. The roof can be made up of a flexible and foldable cover, or by a rigid panel sometimes even formed by movable panels.

In all the prior art solutions, the cover of the rear compartment is further provided to attain a second opening and closing mode, typically through oscillation around a transverse axis located at the rear area of the rear compartment, to enable introduction and removal of luggage and the like from the rear part of the automobile, as e.g. shown in DE 10 2008 030 013.

This second opening and closing mode requires the use of mechanisms and possible driving means different from those provided for displacing the cover designed to enable introduction and withdrawal of the openable roof, hence entailing evident construction complications and the ensuing manufacturing costs.

### Summary of the invention

The object of the present invention is that of overcoming the abovementioned drawback and providing a convertible automobile of the previously described type wherein the opening and closing mechanisms of the cover of the rear compartment are considerably simplified but without negatively affecting functionality thereof.

According to the invention, this object is attained due to the fact that the cover of the rear compartment is provided with a single opening mode enabling both introduction and withdrawal of the roof as well as loading and unloading of the luggage and the like.

According to a preferred embodiment of the invention, the cover of the rear compartment is pivoted substantially at the rear side of such compartment to swing between said closed position and said open position, hence also loading and unloading the luggage and the like can be carried out, same case applying to introduction and withdrawal of the roof, from the front side of the rear compartment. This does not create inconveniences for the user, in that access to the rear compartment from one side or from the opposite side of the automobile is sufficiently easy and comfortable.

Preferably, the convertible automobile according to the invention further includes a rear window substantially vertically slidable between a raised position and a lowered position. The displacement of the roof between closed and open configuration, and vice versa, is enabled when the rear window is at the lowered position. Such rear window is, further, adapted to be selectively kept at raised or lowered position, in each of the abovementioned configurations of the roof.

### Brief description of the drawings

Now, the invention shall be described in detail with reference to the attached drawings, purely provided by way of non-limiting example, wherein:
- figures 1 (A) - (D) schematically show a convertible automobile according to the invention in four respective closed and open configurations of the roof,
- figures 2(A)-(D) show further four different configurations of partial opening of the roof,
- figures 3 (A) - (F) show the different steps of displacing the roof and cover of the rear compartment during opening and, in reverse order, closing, and
- figures 4(A)-(L) schematically show the modes for loading the luggage into the rear compartment and, in reverse order, removal of the luggage from such rear compartment.

### Detailed description of the invention

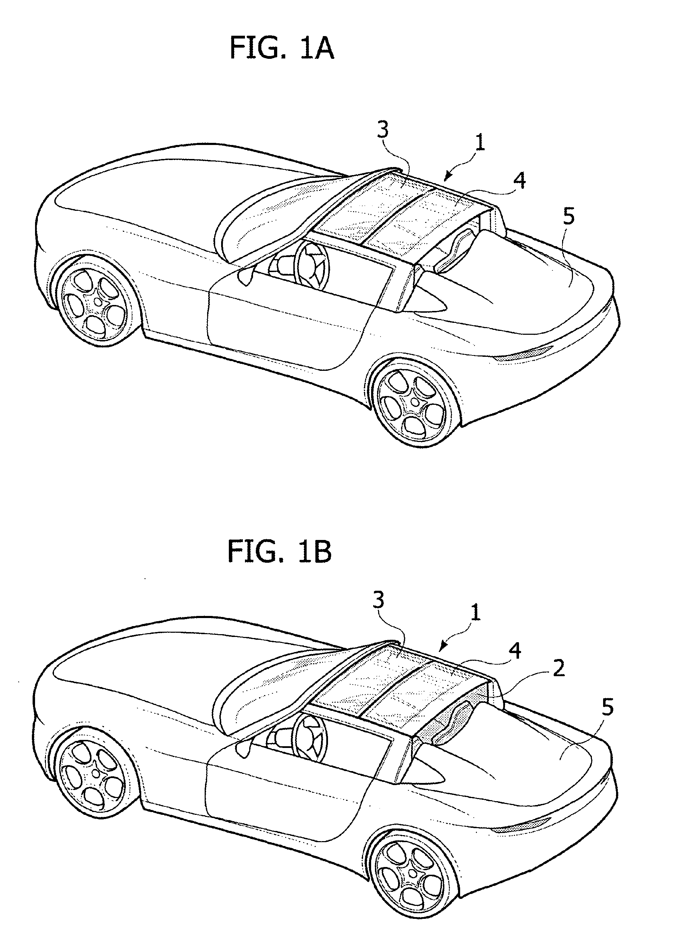

Initially referring to figures 1(A)-(B) a convertible automobile according to the invention comprises a roof 1 displaceable between an advanced and raised closed condition represented in (A) and (D), wherein it closes - at the upper part - the cabin of the automobile, and a receded and lowered condition, represented in (C) and (D), in which it is stowed, as clarified hereinafter, at the rear part of the automobile.

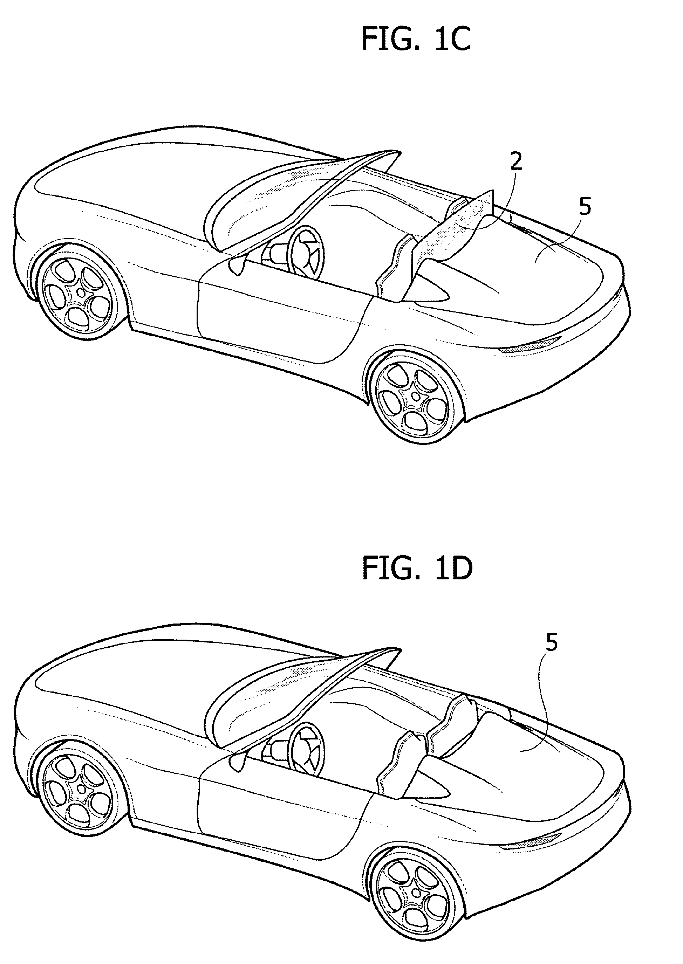

A transparent rear window 2, delimiting - at the rear part - the cabin of the automobile, is displaceable substantially vertically between a raised position, represented in (B) and (C), and a lowered position represented in (A) and (D). The displacement of the rear window 2 is independent from that of the roof 1 and, as clearly observable in figure 1, it can be selectively kept raised or lowered both in the closed condition and in the open condition of the roof 1.

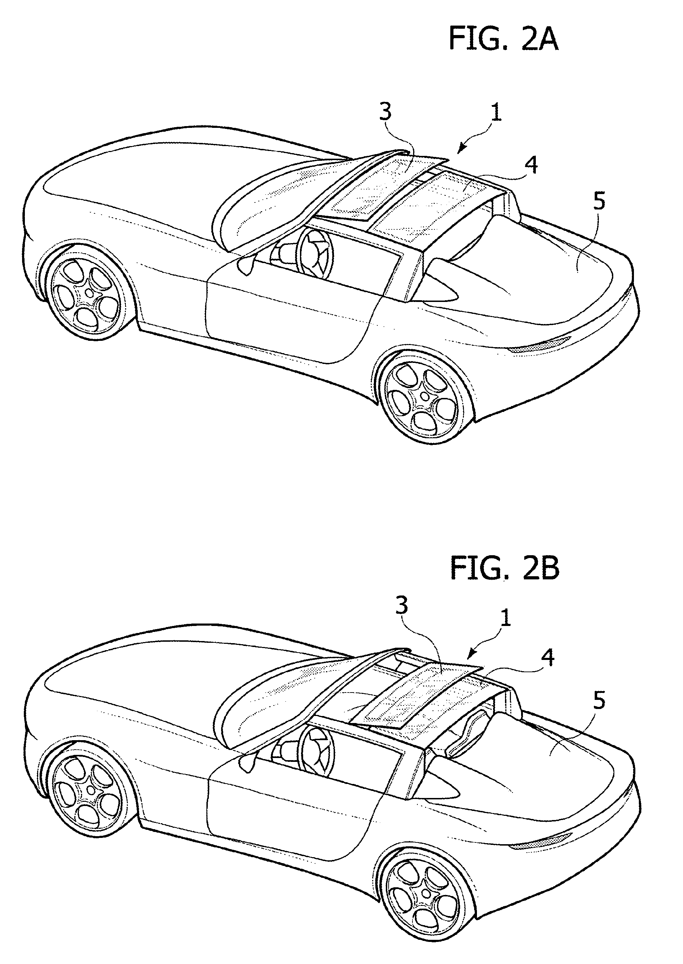

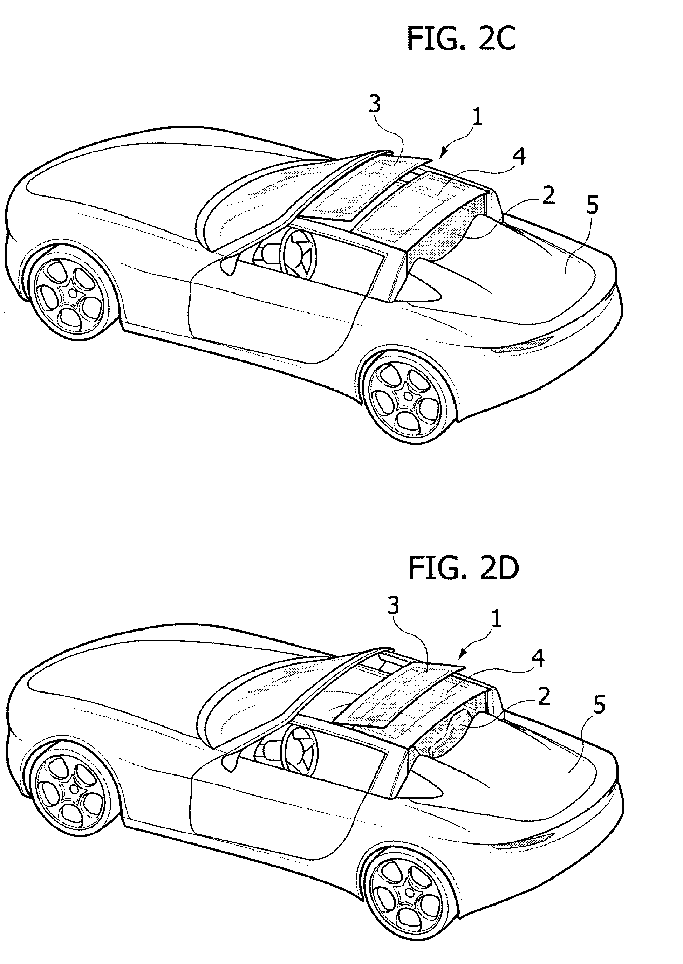

The roof 1 can be formed by a single generally rigid body and entirely or partly transparent or, like in the case represented in figure 2, by two panels also generally rigid and possibly transparent respectively front 3 and rear 4. Keeping the rear panel 4 in closed condition above the cabin of the automobile, the front panel 3 can be rotated upwards around the front side thereof, as represented in (A) and (C) and also slid rearwards so as to be superimposed on the rear panel 4, as indicated in (B) and (D).

Even in such configurations, the rear window 2 can be kept selectively raised, as represented in (C) and (D), or lowered as represented in (A) and (B).

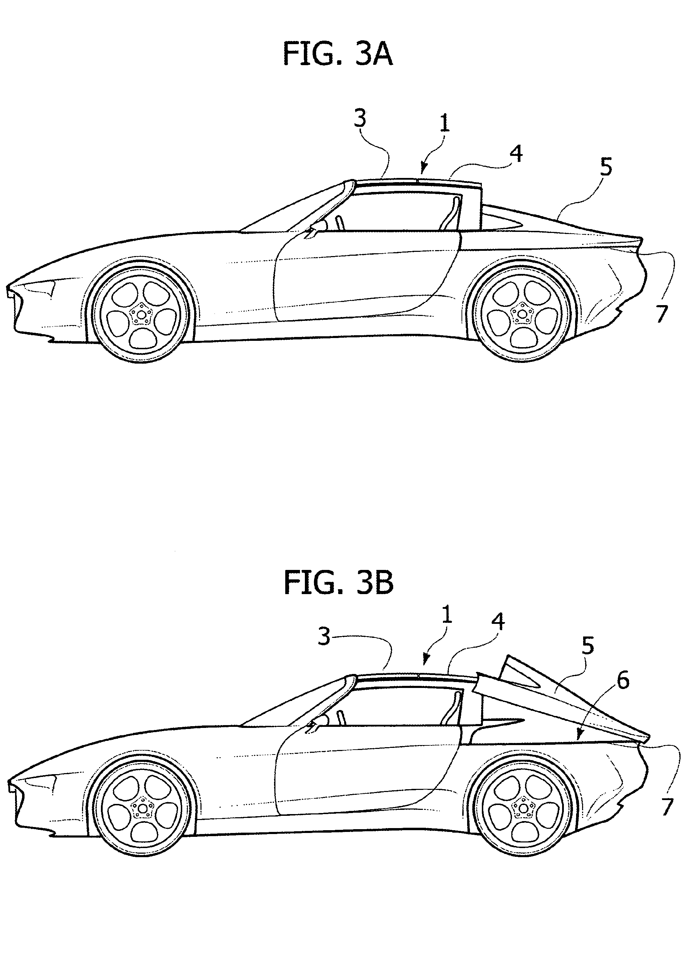

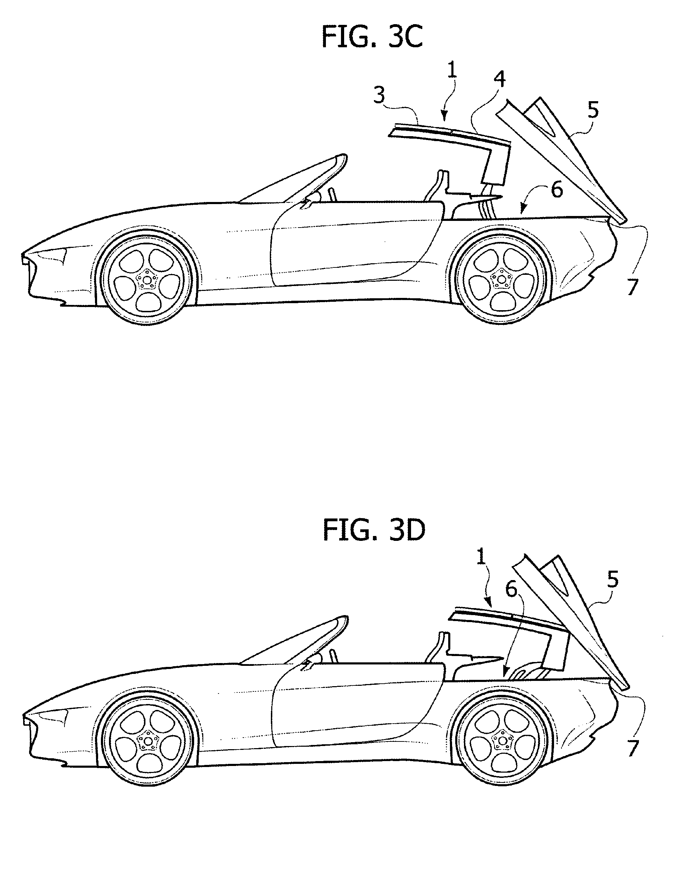

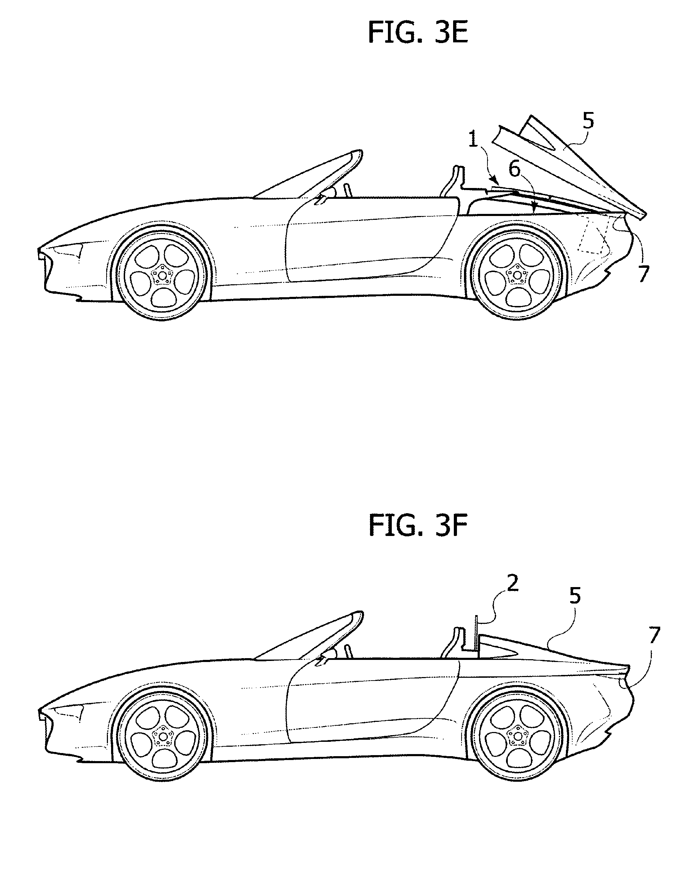

The methods for opening and closing the roof 1 are represented in figures 3(A)-(F). Such figures also show methods for opening and closing a cover 5 fixed at a rear compartment 6 provided to house the roof 1 in the receded and lowered closed condition thereof. The cover 5 is displaceable angularly, by rotating around the rear side of the compartment 6 indicated schematically with 7.

Starting from the closed condition both of the roof 1 and of the cover 5 represented in (A), the upward opening rotation of cover 5 is carried out first as illustrated in (B), and then the roof 1 is receded and lowered into the compartment 6 keeping such cover 5 open, as illustrated in (C), (D) and (E). After stowing the roof 1 into the compartment 6, the cover 5 is once again rotated downwards in closed position, as illustrated in (F).

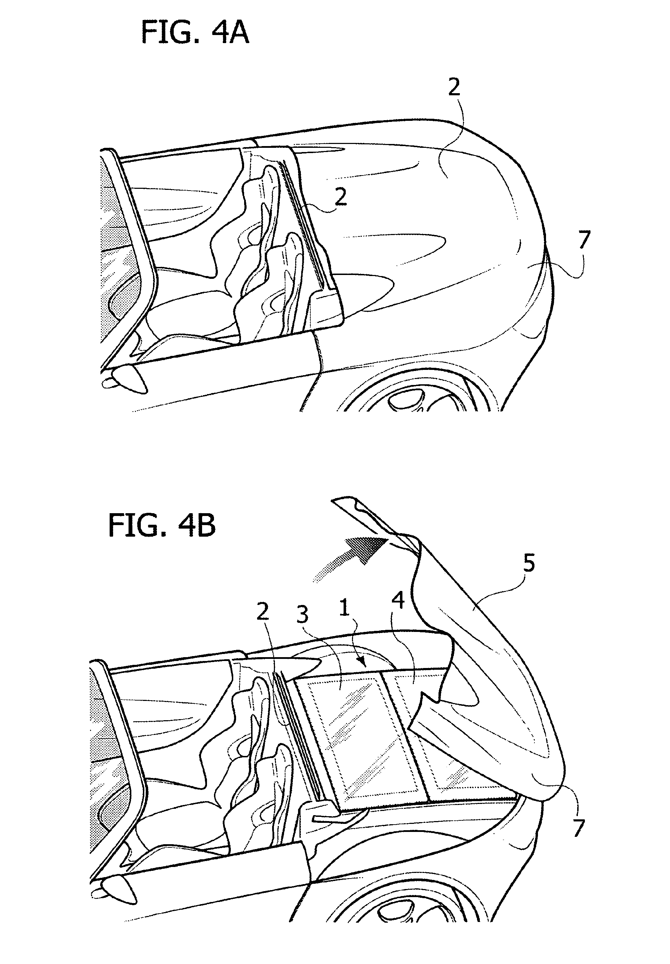

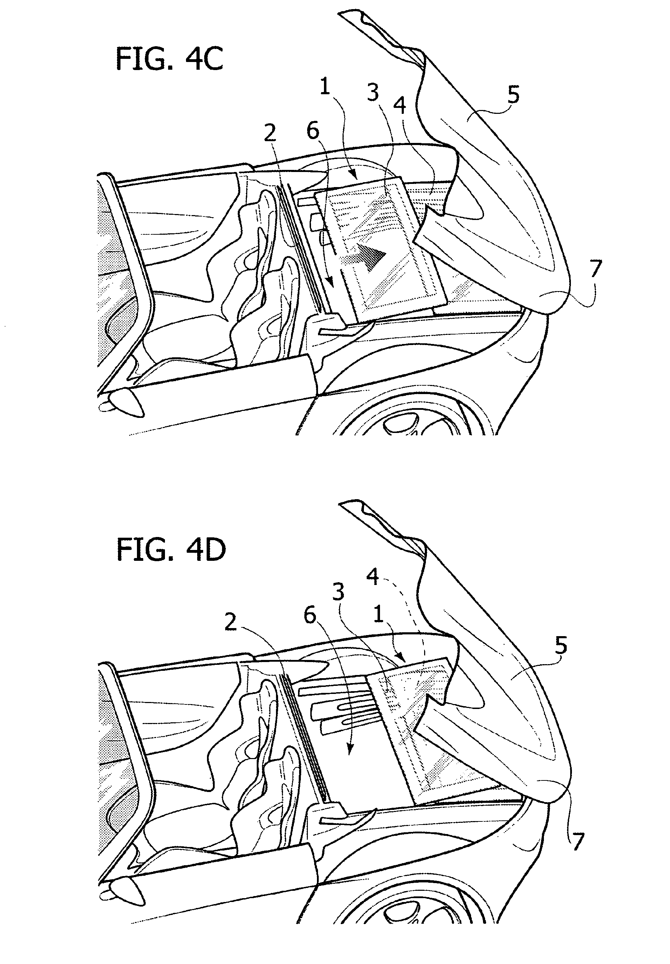

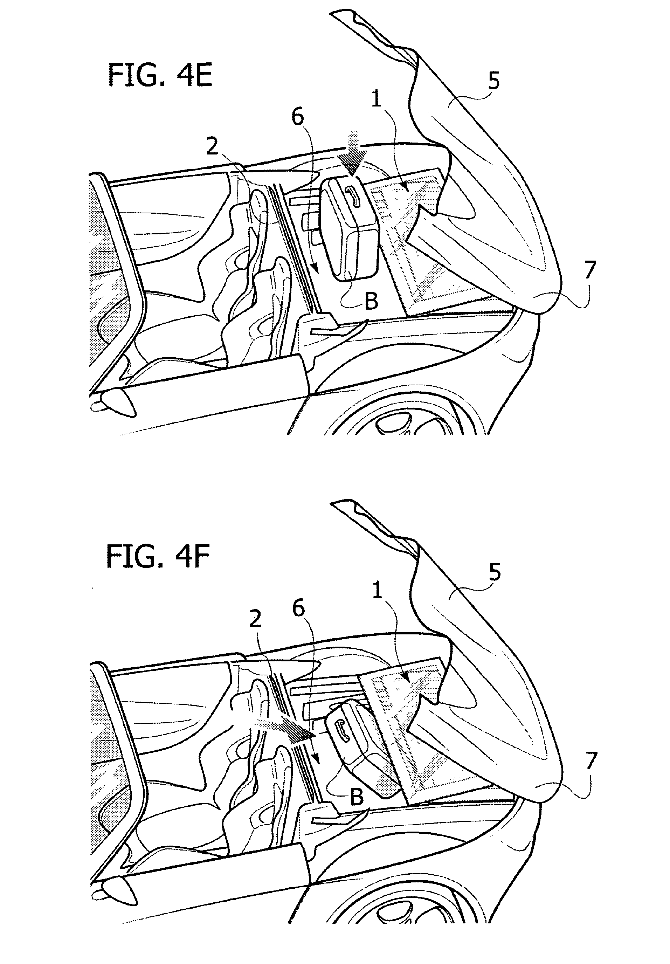

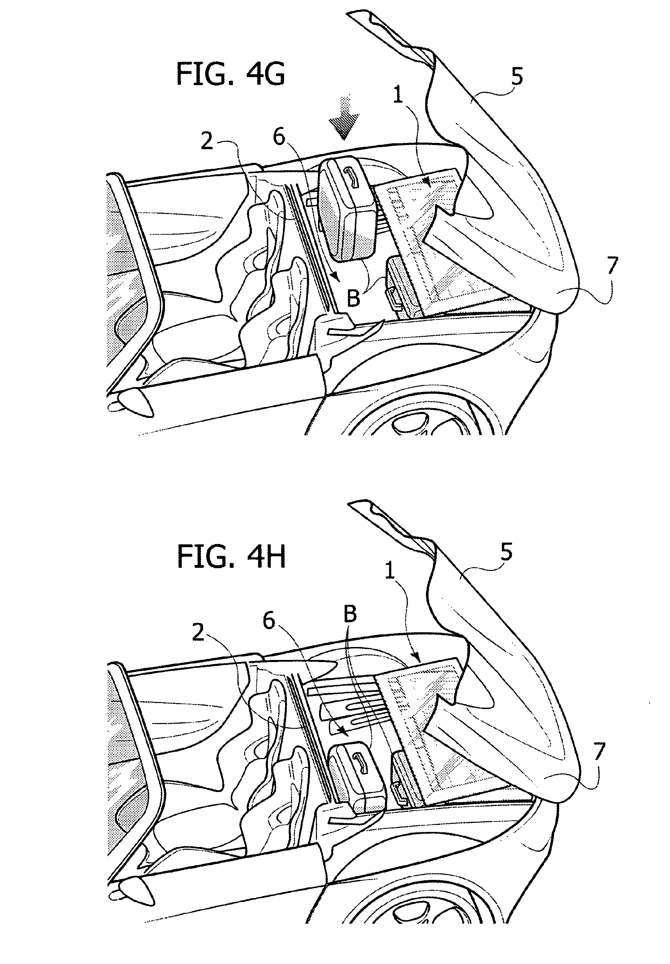

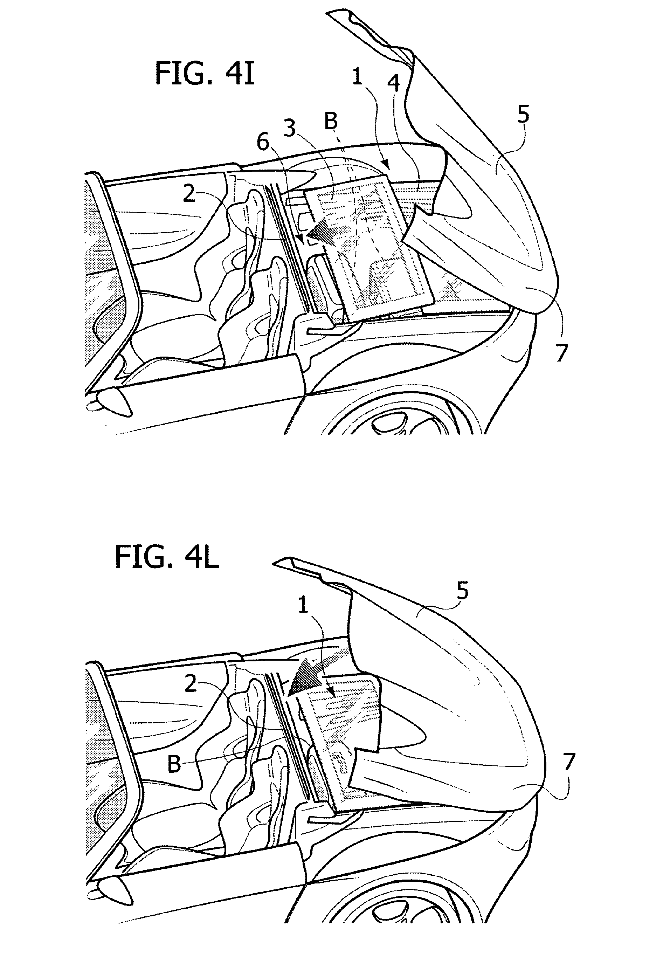

Figures 4 (A) - (L) show the methods of introducing and removing luggage B or the like in the rear compartment 6. Though figure 4 represents such methods in the open condition of the roof 1, the situation can be analogous in the case where the roof 1 is instead kept closed. In both cases, all that is required is to simply open the cover 5 of the rear compartment 6 precisely in the same manner it is opened to enable introduction and withdrawal of the roof 1. Actually, starting from the closed condition represented in (A), the cover is rotated around the rear axis 7 raising as represented from (B) to (I), to enable introduction of the luggage B, and then lowered again around the rear axis 7 and closed again, as represented in (L).

In the case where the roof 1 is also stowed in the rear compartment 6, the space for accommodating the luggage B can be made available due to the superimposing displacement of the front panel 3 on the rear panel 4, as indicated in (C) and from (D) to (H). Then, the front panel 3 is repositioned in front of the rear panel 4, as indicated in (I) and (L), being arranged above the luggage.

In addition, a device (foldable fabric or extensible mesh or movable rigid cover) for separating and containing of the luggage B relatively to roof 1 can be provided for in the compartment 6.

It shall be clear from the description above that the convertible automobile according to the invention allows obtaining a considerable construction simplification regarding the displacement of the cover 5 of the rear compartment 6 which does not require, for introduction and removal of luggage or the like into such compartment 6, mechanisms or possible driving means supplementary or different with respect to those provided for opening and closing the roof 1. This allows apparent construction simplification of the automobile, without entailing any prejudice regarding luggage loading and unloading comfort.

Naturally, the construction details and the embodiments may widely vary with respect to what has been described and illustrated, without departing from the scope of protection of the present invention as defined in the claims that follow.

## Claims

1. Convertible automobile having a roof (1) displaceable between an advanced and raised closed condition and a receded and lowered open condition, a rear compartment (6) designed to house the roof (1) in said open condition, and a cover (5) of the rear compartment (6) movable between a closed position and an open position to enable the introduction of the roof upon displacement thereof from the closed condition to the open condition as well as withdrawal of the roof (1) upon return thereof from the open condition to the closed condition, and wherein said rear compartment (6) is further provided to accommodate luggage and the like (B), **characterised in that** said cover (5) of the rear compartment (6) is provided with a single opening mode enabling both introduction and withdrawal of the roof (1) as well as loading and unloading of the luggage and the like (B).

2. Convertible automobile according to claim 1, **characterised in that** said cover (5) of the rear compartment (6) is pivoted substantially at the rear side (7) of said rear compartment (6) to swing between said closed position and said open position.

3. Convertible automobile according to claim 1 or 2, **characterized in that** it further includes a rear window (2) substantially vertically slidable between a raised position and a lowered position, the roof being allowed to displace between the open and closed conditions when the rear window is at said lowered position.

4. Convertible automobile according to any of claims 1 to 3, **characterized in that** said roof (1) is formed by two generally rigid respectively front and rear parts (3, 4) of which the front part (3) is movable relative to the rear part (4).

5. Convertible automobile according to any of claims 1 to 4, **characterized in that** it further comprises means for containing and protecting the luggage and the like (B) within said rear compartment (6).

6. Convertible automobile according to claim 5, **characterized in that** said containment and protection means comprise said roof (1) or a part (3) thereof when in said opening condition.

7. Convertible automobile according to claim 3, **characterized in that** when said roof is in said open and closed conditions, said rear window (2) is adapted to be selectively held either at said raised position or at said lowered position.

## Patentansprüche

1. Cabriolet-Kraftfahrzeug, das ein Dach (1), das zwischen einem ausgefahrenen und angehobenen geschlossenen Zustand sowie einem eingefahrenen und abgesenkten offenen Zustand umgestellt werden kann, einen Heckraum (6), der dazu dient, das Dach (1) in dem offenen Zustand aufzunehmen, sowie eine Abdeckung (5) des Heckraums (6) aufweist, die zwischen einer geschlossenen Position und einer offenen Position bewegt werden kann, um das Einführen des Dachs beim Versetzen desselben von dem geschlossenen Zustand in den offenen Zustand sowie Herausbewegen des Dachs (1) beim Zurückführen desselben von dem offenen Zustand in den geschlossenen Zustand zu ermöglichen, und wobei der Heckraum (6) des Weiteren zum Aufnehmen von Gepäck und dergleichen (B) vorhanden ist, **dadurch gekennzeichnet, dass** die Abdeckung (5) des Heckraums (6) einen einzelnen Öffnungsmodus aufweist, der sowohl Hineinbewegen als auch Herausbewegen des Dachs (1) sowie Einladen und Ausladen des Gepäcks und dergleichen (B) ermöglicht.

2. Cabriolet-Kraftfahrzeug nach Anspruch 1, **dadurch gekennzeichnet, dass** die Abdeckung (5) des Heckraums (6) im Wesentlichen an der hinteren Seite (7) des Heckraums (6) drehbar angebracht ist, um sie zwischen der geschlossenen Position und der offenen Position zu schwenken.

3. Cabriolet-Kraftfahrzeug nach Anspruch 1 oder 2, **dadurch gekennzeichnet, dass** es des Weiteren ein Heckfenster (2) umfasst, das im Wesentlichen vertikal zwischen einer angehobenen Position und einer abgesenkten Position verschoben werden kann, wobei sich das Dach zwischen dem offenen und dem geschlossenen Zustand bewegen kann, wenn sich das Heckfenster in der abgesenkten Position befindet.

4. Cabriolet-Kraftfahrzeug nach einem der Ansprüche 1 bis 3, **dadurch gekennzeichnet, dass** das Dach (1) durch zwei im Allgemeinen starre Teile, einen vorderen und einen hinteren Teil (3, 4), gebildet wird, von denen der vordere Teil (3) relativ zu dem hinteren Teil (4) bewegt werden kann.

5. Cabriolet-Kraftfahrzeug nach einem der Ansprüche 1 bis 4, **dadurch gekennzeichnet, dass** es des Weiteren eine Einrichtung umfasst, die das Gepäck und dergleichen (B) in dem Heckteil (6) aufnimmt und schützt.

6. Cabriolet-Kraftfahrzeug nach Anspruch 5, **dadurch gekennzeichnet, dass** die Aufnahme- und-Schutz-Einrichtung das Dach (1) oder einen Teil (3) desselben umfasst, wenn es sich in dem offenen Zustand befindet.

7. Cabriolet-Kraftfahrzeug nach Anspruch 3, **dadurch gekennzeichnet, dass** das Heckfenster (2) so eingerichtet ist, dass es, wenn sich das Dach in dem offenen und dem geschlossenen Zustand befindet, selektiv entweder in der angehobenen Position oder der abgesenkten Position gehalten wird.

## Revendications

1. Automobile décapotable possédant un toit (1) déplaçable entre une condition fermée avancée et levée et une condition ouverte reculée et baissée, un compartiment arrière (6) conçu pour loger le toit (1) dans ladite condition ouverte, et un couvercle (5) du compartiment arrière (6) mobile entre une position fermée et une position ouverte pour permettre l'introduction du toit lors de son déplacement de la condition fermée à la condition ouverte ainsi que le retrait du toit (1) lors de son retour de la condition ouverte à la condition fermée, et dans laquelle ledit compartiment arrière (6) est en outre prévu pour loger des bagages et analogues (B), **caractérisée en ce que** ledit couvercle (5) du compartiment arrière (6) est pourvu d'un seul mode d'ouverture permettant à la fois l'introduction et le retrait du toit (1) ainsi que le chargement et le déchargement des bagages et analogues (B).

2. Automobile décapotable selon la revendication 1, **caractérisée en ce que** ledit couvercle (5) du compartiment arrière (6) pivote sensiblement sur le côté arrière (7) dudit compartiment arrière (6) pour osciller entre ladite position fermée et ladite position ouverte.

3. Automobile décapotable selon la revendication 1 ou 2, **caractérisée en ce qu'**elle comprend en outre une lunette arrière (2) coulissant de façon sensiblement verticale entre une position levée et une position baissée, le toit pouvant se déplacer entre les conditions ouverte et fermée lorsque la lunette arrière est dans ladite position baissée.

4. Automobile décapotable selon une quelconque des revendications 1 à 3, **caractérisée en ce que** ledit toit (1) est formé par deux parties, respectivement avant et arrière, généralement rigides (3, 4) dont la partie avant (3) est mobile par rapport à la partie arrière (4).

5. Automobile décapotable selon une quelconque des revendications 1 à 4, **caractérisée en ce qu'**elle comprend en outre des moyens pour confiner et protéger les bagages et analogues (B) à l'intérieur dudit compartiment arrière (6).

6. Automobile décapotable selon la revendication 5, **caractérisée en ce que** lesdits moyens pour de confinement et de protection comprennent ledit toit (1) ou une partie (3) de celui-ci lorsqu'il est dans ladite condition d'ouverture.

7. Automobile décapotable selon la revendication 3, **caractérisée en ce que**, lorsque ledit toit est dans lesdites conditions ouverte et fermée, ladite lunette arrière (2) est adaptée pour être sélectivement maintenue dans ladite position levée ou dans ladite position baissée.
